# EUROPEAN PATENT APPLICATION

(11) **EP 4 648 198 A1**
(43) Date of publication of application: **12.11.2025**
(21) Application number: 23915017.0
(22) Date of filing: 28.12.2023
(51) Int. Cl.: H01M 50/30, H01M 50/367, H01M 50/358, H01M 50/20

(54) **BATTERY PACK**

(30) Priority: 05.01.2023 KR 20230001571
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR)
(74) Representative: Plasseraud IP
(86) International application number: PCT/KR2023/021885
(87) International publication number: WO 2024/147557

(57) **Abstract**

A battery pack according to the present invention is disclosed. The battery pack of the present invention includes: a main frame provided with an accommodating space and an open upper portion; a side beam dividing the accommodating space where a battery module is accommodated and provided with an inner space spatially connected to the accommodating space, the side beam including a gas inlet disposed at two widthwise ends thereof that spatially connect the accommodating space and the inner space; and a lid covering the accommodating space of the main frame and provided with a flowing space connected to the inner space and an exhaust outlet connected to the flowing space.

## Description

### [TECHNICAL FIELD]

This application claims the benefit of priority based on Korean Patent Application No. 10-2023-0001571 filed on January 5, 2023, entire content disclosed in the document of the patent applications is included as a part of this specification.

The present invention relates to a battery pack capable of effectively discharging and dispersing the thermal energy of high-temperature gas and flame, and preventing collapse of the battery pack structure and battery module structure.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic battery cells and pouch-type battery cells that may be applied to products such as mobile phones due to their thin thickness. In terms of materials of battery cells, demand is increasing for lithium battery cells such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells is approximately 2.5V to 4.2V. When a higher output voltage is required, a battery module is constituted by connecting multiple battery cells in series, and a battery pack is constituted by connecting multiple battery modules. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

It is important that dissipation of the heat generated from each battery module is facilitated in a battery pack including multiple battery modules. In some cases, the heat generated from the battery module during the charge and discharge process of the battery pack is not effectively dissipated. In such case, the battery module may be degraded as heat is accumulated in the battery module. When the degradation of the battery module is accelerated, the battery module may catch fire or explode. Accordingly, the high-power, large-capacity battery pack is installed with a cooling device for cooling each battery module and a safety device.

In a related art, a battery pack is disclosed in Korean Patent Application Publication No. 2022-0114354 (published on August 17, 2022, titled "Battery Pack"). The publication discloses a battery pack having a structure in which gas and flame discharged from the battery module are introduced into a cross member and discharged to the outside through an exhaust hole provided in the upper housing of the battery pack, and a flow guide member protrudes in widthwise direction inside the cross member.

The cross member is provided horizontally in widthwise direction of the battery pack, and the flow guide member is provided horizontally to connect the cross member. When foreign matter is generated due to melting of the material of the battery module or the battery cell during the ignition of battery module, the foreign matter may narrow or block the passage between the horizontal cross member and the flow guide member. In particular, since a plurality of partition walls and flow-blocking parts are arranged in the passage of the flow guide member, the passage structure of the flow guide member becomes too complex, and there is a high possibility that the passage be narrowed or blocked by foreign matter. When the passage of the cross member and the flow guide member is narrowed or blocked by foreign matter, it is difficult for gas or flame to be discharged from the battery pack, and the internal pressure of the battery pack may rapidly increase. Accordingly, the structure of the battery module or the battery pack may collapse. Furthermore, as the battery module or the battery pack collapses, flame may be discharged to the outside, which may increase the risk of fire.

### [DETAILED DESCRIPTION OF THE INVENTION]

### [TECHNICAL PROBLEM]

In order to solve the above-described problems, it is an object of the present invention to provide a battery pack capable of rapidly discharging gas and thermal energy by utilizing the inner space of the side beam and the flowing space of the lid when the battery pack or battery module ignites.

It is an object of the present invention to provide a battery pack capable of preventing rapid thermal energy accumulation and rapid internal pressure increase.

It is an object of the present invention to provide a battery pack capable of preventing structural collapse thereof or of battery module.

It is an object of the present invention to provide a battery pack capable of significantly reducing the amount of emitted dust.

It is an object of the present invention to provide a battery pack without an additional structure for thermal energy and gas discharge.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, a battery pack of the present invention includes: a main frame provided with an internal space and an open upper portion; a side beam dividing an accommodating space where a battery module is accommodated and provided with an inner space spatially connected to the accommodating space, the side beam including a gas inlet disposed at two widthwise ends thereof that spatially connect the accommodating space and the inner space; and a lid covering the accommodating space of the main frame and provided with a flowing space spatially connected to the inner space and an exhaust outlet spatially connected to the flowing space.

The gas inlet may be disposed at a predetermined height higher than an upper end portion of the battery module.

The side beam may further include an internal partition wall extending in a widthwise direction to divide the inner space.

A lower pocket spatially connected to the inner space may be provided under the inner space of the side beam.

A chute member may be provided between the inner space and the lower pocket.

The chute member may include: a first chute disposed under the gas inlet and inclined downward from an inner side surface of the side beam toward a widthwise center of the side beam; and a second chute inclined downward from an internal partition wall of the side beam toward the inner side surface of the side beam.

The first chute may be spaced apart from the internal partition wall, and the second chute may be spaced apart from the inner side surface of the side beam.

Dust in the inner space descends along the chute member and deposited in the lower pocket, and the chute member may prevent dust in the lower pocket from moving upward into the inner space.

At least one flow partition wall may be installed in the flowing space of the lid, the flow partition wall extending in widthwise direction of the lid and partially blocks the flowing space in lengthwise direction to form a flow passage.

A gas introduced through the lower inlet and flowing in the flowing space toward the exhaust outlet of the lid may be guided in widthwise direction by the flow partition wall.

A pocket projection protruding upward across the flow passage may be provided at a bottom of the flowing space of the lid.

The flow partition wall may be parallel to widthwise direction of the lid, and the pocket projection may be parallel to lengthwise direction of the lid.

The pocket projection may guide dust mixed in the gas to be deposited in the pocket space divided by the pocket projection.

A lower inlet of the lid may be disposed at a center portion of the lid, and the exhaust outlet may be disposed at a lengthwise end of the lid.

An upper outlet may be provided at one lengthwise end of an upper surface of the side beam, a lower inlet may be provided at a portion of a bottom surface of the lid facing the upper outlet, and the upper outlet and the lower inlet spatially connect the inner space of the side beam to the flowing space of the lid.

A gas generated in the battery module may be introduced into an internal partition wall of the side beam through the gas inlet in a portion of the accommodating space above the battery module, flows along lengthwise direction of the inner space of the side beam, enters the flowing space of the lid through the upper outlet and the lower inlet, and may be discharged to outside through the exhaust outlet after passing through the flowing space of the lid.

### [ADVANTAGEOUS EFFECTS]

According to the present invention, since gas and thermal energy are rapidly discharged by utilizing the inner space of the side beam and the flowing space of the lid, which are wide spaces in the battery pack, rapid thermal energy accumulation and internal pressure increase in the battery pack may be prevented.

According to the present invention, rapid thermal energy accumulation and internal pressure increase in the battery pack may be prevented such that structural collapse of the battery pack or battery module may be prevented.

According to the present invention, since dust mixed in the gas is removed from the inner space of the side beam and the flowing space of the lid, the amount of dust discharged may be significantly reduced.

According to the present invention, since the flowing space of the lid is significantly larger than the inner space of the side beam, the flow rate of gas and dust may be rapidly slowed down in the flowing space of the lid to be spread and dispersed. Accordingly, since dust mixed in the gas is deposited at the bottom of the flowing space of the lid, the amount of dust discharged through the exhaust outlet may be significantly reduced.

According to the present invention, since the side beam and the lid are used as passages through which gas or thermal energy is discharged, it is not necessary to add a separate structure for discharging thermal energy and gas to the battery pack.

In addition to the advantageous effects described above, specific effects of the present invention will be described further while describing specific details of the present invention.

### [BRIEF DESCRIPTION OF DRAWINGS]

FIG. 1 is a perspective view schematically illustrating a main frame of a battery pack having an internal space partitioned by a side beam according to the present invention.
FIG. 2 is a perspective view schematically illustrating the main frame of the battery pack having the accommodating space with a battery module accommodated therein according to the present invention.
FIG. 3 is a plan view schematically illustrating the main frame of the battery pack having the accommodating space with a battery module accommodated therein according to the present invention.
FIG. 4 is a perspective view schematically illustrating the main frame of FIG. 2 with a lid installed thereon.
FIG. 5 is a perspective cross-sectional view schematically illustrating a structure of the flowing space of the lid taken along the line V-V of FIG. 4.
FIG. 6 is a cross-sectional view schematically illustrating the battery pack taken along the line VI-VI of FIG. 3.
FIG. 7 is a perspective view schematically illustrating a flow direction of gas in a side beam according to the present invention.
FIG. 8 is a cross-sectional view schematically illustrating a battery pack taken along the line VIII-VIII of FIG. 3.
FIG. 9 is a plan view schematically illustrating a gas flow in a flowing space of a lid according to the present invention.
FIG. 10 is a perspective view schematically illustrating a gas discharged through an exhaust outlet of a lid according to the present invention.

**[DESCRIPTION OF REFERENCE NUMERALS]**

| | | | |
|---|---|---|---|
| 10: | battery pack | 20: | main frame |
| A: | accommodating space | 22: | bottom member |
| 23: | sidewall member | 24: | center beam |
| 25: | side beam | I: | inner space |
| 251: | gas inlet | 253: | internal partition wall |
| 255: | chute member | 255a: | first chute |
| 255b: | second chute | 257: | upper outlet |
| P: | lower pocket | 30: | lid |
| F: | flowing space | 31: | lower inlet |
| 33: | flow partition wall | 35: | pocket projection |
| 39: | exhaust outlet | 50: | battery module |
| G: | height | | |

### [DETAILED DESCRIPTION OF THE PREFERRED EMBODIMENTS]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery pack according to an embodiment of the present invention will be described.

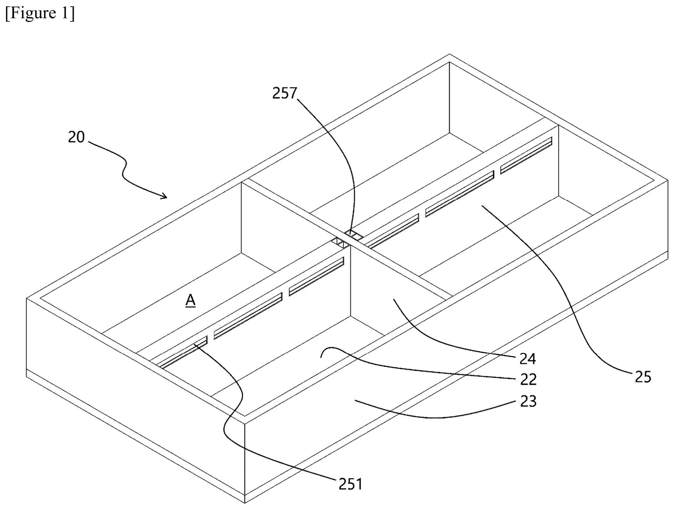

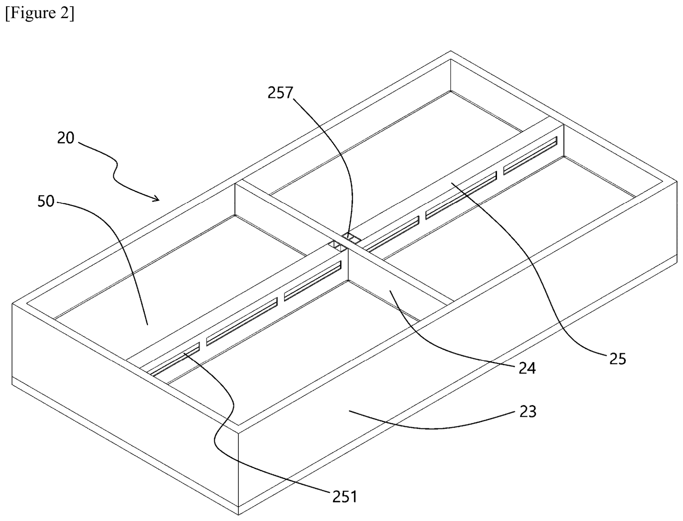

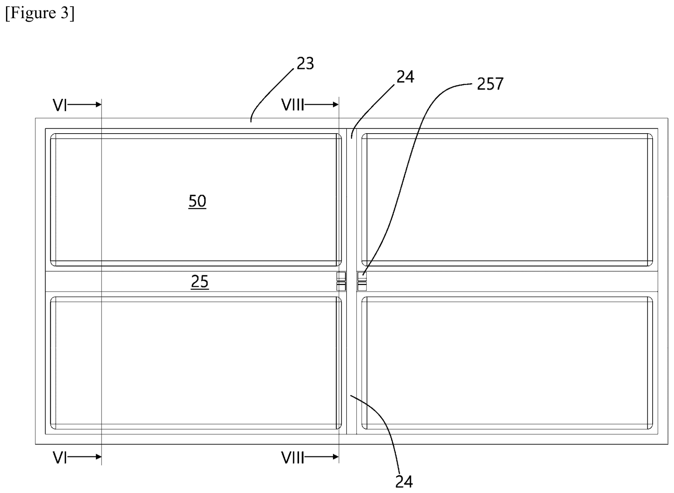

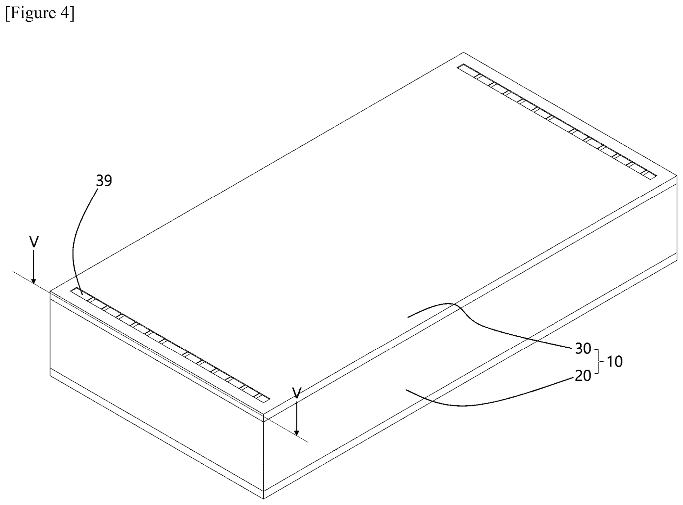

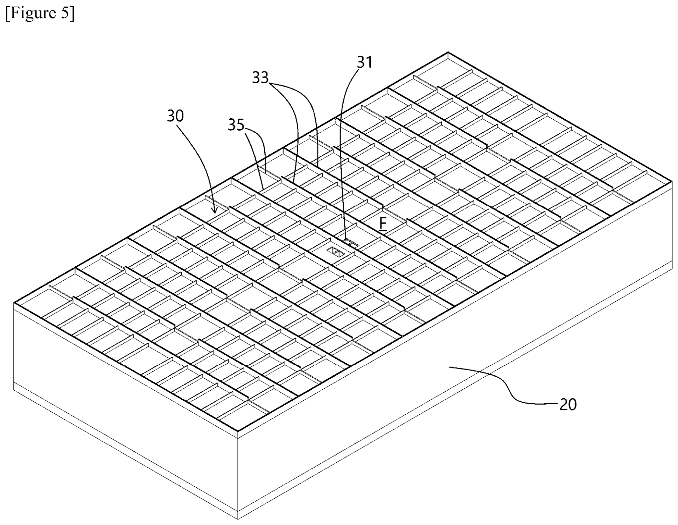

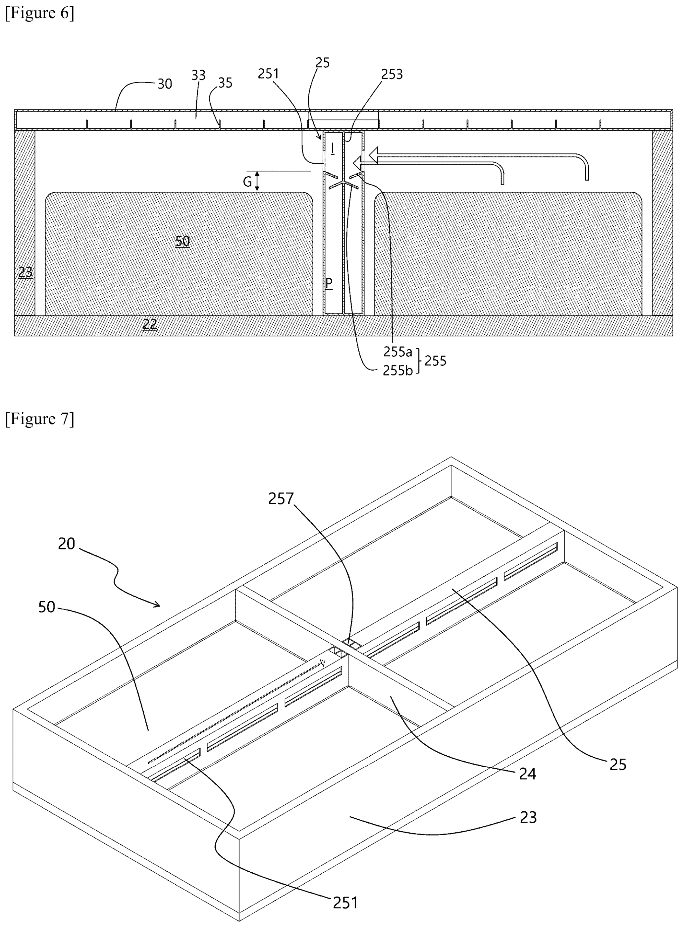

FIG. 1 is a perspective view schematically illustrating a main frame of a battery pack having an internal space partitioned by a side beam according to the present disclosure, FIG. 2 is a perspective view schematically illustrating the main frame of the battery pack having the accommodating space with a battery module accommodated therein according to the present disclosure, FIG. 3 is a plan view schematically illustrating the main frame of the battery pack having the accommodating space with a battery module accommodated therein according to the present disclosure, FIG. 4 is a perspective view schematically illustrating the main frame of FIG. 2 with a lid installed thereon, FIG. 5 is a perspective cross-sectional view schematically illustrating a structure of the flowing space of the lid taken along the line V-V of FIG. 4, FIG. 6 is a cross-sectional view schematically illustrating the battery pack taken along the line VI-VI of FIG. 3, and FIG. 7 is a perspective view schematically illustrating a flow direction of gas in a side beam according to the present disclosure.

Referring to FIGS. 1 to 7, a battery pack 10 according to an embodiment of the present invention includes a main frame 20, a side beam 25 and a lid 30.

The main frame 20 is provided with an internal space I and an open upper portion. The main frame 20 may be overall rectangular.

The main frame 20 includes a bottom member 22 and a sidewall member 23. The rectangular bottom member 22 extends in widthwise direction and lengthwise direction. The sidewall member 23 is connected to the edge of the bottom member 22 and extends upward. That is, the bottom member 22 has a rectangular panel shape, and the sidewall member 23 has a rectangular frame shape.

The side beam 25 extends in lengthwise direction to divide the accommodating space A along widthwise direction defined by the bottom member 22 and the sidewall member 23. The side beam 25 is erected to partition the accommodating space A for accommodating a battery module 50 and is provided an inner space I spatially connected to the accommodating space A. A gas inlet 251 may be disposed at two widthwise ends of the side beam 25 so as to spatially connect the accommodating space A and the inner space I. The side beam 25 has an overall shape of rectangular panel. The side beam 25 is arranged parallel to lengthwise direction of the main frame 20.

A center beam 24 parallel to the widthwise direction of the main frame 20 is installed in the internal space I of the main frame 20. The side beam 25 is installed on both sides of the center beam 24. The center beam 24 and the side beam 25 intersect each other perpendicularly. The center beam 24 divides the accommodating space A along lengthwise direction, and the side beam 25 divides the accommodating space A along widthwise direction.

The lid 30 is installed to cover the accommodating space A of the main frame 20, has a flowing space F spatially connected to the inner space I, and is provided with an exhaust outlet 39 spatially connected to the flowing space F. The lid 30 has a shape of a rectangular panel to cover the entire upper portion of the main frame 20.

When the battery pack 10 or battery module 50 ignites, gas and flame may be generated. In addition, foreign matter such as dust may be generated when the high-temperature gas or flame melts the materials of the battery module 50 or battery cell.

The accommodating space A, the gas inlet 251, the inner space I, flowing space F and exhaust outlet 39 are spatially connected in order. Accordingly, gas and thermal energy generated when the battery module 50 ignites may be quickly discharged through the inner space I of the side beam 25 and the flowing space F of the lid 30. That is, since the gas and thermal energy are quickly discharged by utilizing the inner space I and flowing space F, which are wide spaces in the battery pack 10, thermal energy accumulation inside the battery pack 10 and increase in internal pressure may be prevented.

In addition, while the gas and thermal energy in the accommodating space A flow into the inner space I of the side beam 25 and flow in lengthwise direction of the side beam 25, most of the dust mixed in the gas falls downward in the inner space I of the side beam 25. Moreover, since the size of the flowing space F of the lid 30 is significantly larger compared to that of the inner space I of the side beam 25, the flow rate of gas and dust may be rapidly slowed down and dispersed in the flowing space F of the lid 30. Accordingly, as the dust mixed in the gas is deposited at the bottom of the flowing space F of the lid 30, the amount of dust discharged through the exhaust outlet 39 may be significantly reduced. By reducing the amount of dust discharged through the exhaust outlet 39, flame may be suppressed from being discharged from the battery pack 10.

In addition, since the size of the flowing space F of the lid 30 is significantly larger compared to that of the inner space I of the side beam 25, the internal pressure may be reduced in the flowing space F of the lid 30, and the concentration of thermal energy may also be dispersed and alleviated.

Furthermore, since the side beam 25 and the lid 30 are used as passages through which gas or thermal energy is discharged, it is not necessary to add a separate structure for discharging thermal energy and gas to the battery pack 10.

As described above, by reducing the amount of dust discharged and reducing the thermal energy and internal pressure, the structural collapse of the battery module 50 and the battery pack 10 may be prevented.

The gas inlet 251 is disposed at a predetermined height (G: see FIG. 6) higher than the upper end portion of the battery module 50. Here, at least two gas inlets 251 may be provided along lengthwise direction of the side beam 25 in the upper portion of the side beam 25. Since the gas inlet 251 is positioned higher than the upper end portion of the battery module 50, dust generated in the battery module 50 may be blocked by the periphery of the gas inlet 251 and guided to settle again in the upper end portion of the battery module 50. Accordingly, dust generated when the battery module 50 ignites may be prevented from being discharged out of the battery pack 10.

The side beam 25 may further include an internal partition wall 253 extending in widthwise direction to divide the inner space I. Since the internal partition wall 253 divides the inner space I of the side beam 25 into two spaces, gas, dust, thermal energy and flame in a specific accommodating space A may be prevented from flowing into the inner space I and then into the neighboring accommodating space A and to the battery module 50. Additionally, it is possible to prevent neighboring battery modules 50 from spreading flame to each other.

A lower pocket P spatially connected to the inner space I of the side beam 25 may be provided under the inner space I. In addition, a chute member 255 may be provided between the inner space I and the lower pocket P. Accordingly, dust flowing into the inner space I of the side beam 25 may descend along the chute member 255 and be deposited at the bottom of the lower pocket P. In addition, since the chute member 255 is arranged between the inner space I and the lower pocket P, dust deposited in the lower pocket P may be prevented from floating upward and rising back into the inner space I.

The chute member 255 includes a first chute 255a and a second chute 255b.

The first chute 255a is arranged under the gas inlet 251 and inclined downward from the inner side surface of the side beam 25 toward the widthwise center. At least one first chute 255a may be installed under the gas inlet 251.

The second chute 255b is inclined downward from the internal partition wall 253 of the side beam 25 toward the inner side surface of the side beam 25. At least one second chute 255b may be installed under the first chute 255a. The first chute 255a and the second chute 255b are arranged to incline downward in opposite directions. Accordingly, dust falling from the gas inlet 251 may slide down on the surfaces of the first chute 255a and the second chute 255b and be deposited in the lower pocket P. In addition, even when the dust deposited in the lower pocket P floats upward, the dust may be prevented from flowing upward blocked by the first chute 255a and the second chute 255b.

The first chute 255a may be space apart from the internal partition wall 253, and the second chute 255b may be space apart from the inner side surface of the side beam 25. Here, since the passages of the first chute 255a and the passage of the second chute 255b are arranged on opposite sides, the first chute 255a and the second chute 255b may form a passage through which the dust falls downward while blocking the inner space I of the side beam 25.

The lower inlet 31 of the lid 30 is arranged at the center portion of the lid 30, and the exhaust outlet 39 is arranged at the lengthwise end of the lid 30. Accordingly, since the distance between the lower inlet 31 and the exhaust outlet 39 is arranged to be the furthest, a long flow passage may be formed through which gas and dust in the flowing space F of the lid 30 move. Furthermore, dust mixed in the gas may be relatively deposited in the flowing space F of the lid 30.

An upper outlet 257 is provided on the upper surface of one lengthwise end of the side beam 25, and a lower inlet 31 is provided at the bottom surface of the lid 30 facing the upper outlet 257. The upper outlet 257 and the lower inlet 31 spatially connect the inner space I of the side beam 25 to the flowing space F of the lid 30. Accordingly, gas and dust of the inner space I of the side beam 25 are introduced into the flowing space F of the lid 30 through the upper outlet 257 and the lower inlet 31.

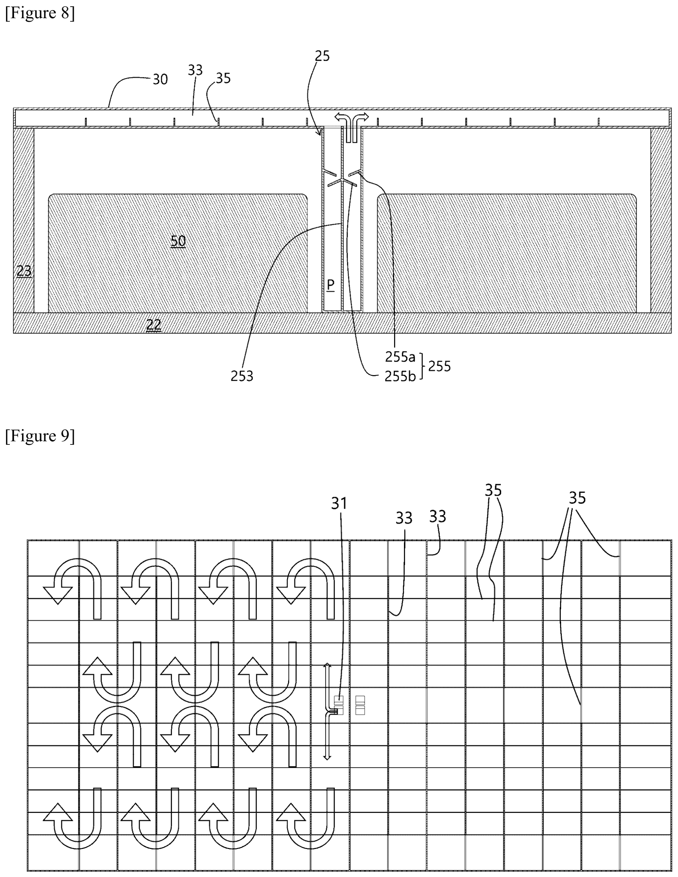

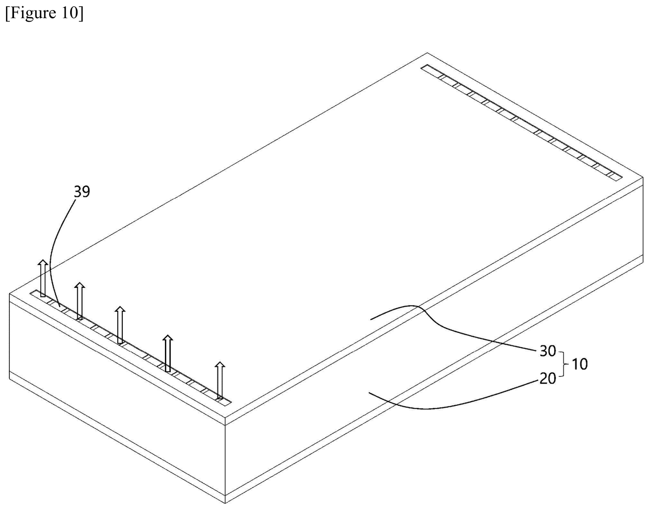

FIG. 5 is a perspective cross-sectional view schematically illustrating a structure of the flowing space of the lid taken along the line V-V of FIG. 4, FIG. 6 is a cross-sectional view schematically illustrating the battery pack taken along the line VI-VI of FIG. 3, FIG. 7 is a perspective view schematically illustrating a flow direction of gas in a side beam according to the present invention, FIG. 8 is a cross-sectional view schematically illustrating a battery pack taken along the line VIII-VIII of FIG. 3, FIG. 9 is a plan view schematically illustrating a gas flow in a flowing space of a lid according to the present invention, and FIG. 10 is a perspective view schematically illustrating a gas discharged through an exhaust outlet of a lid according to the present invention.

Referring to FIGS. 5 to 10, at least one flow partition wall 33 extending in widthwise direction of the lid 30 and partially blocking the flowing space F in lengthwise direction to form a flow passage may be installed in the flowing space F of the lid 30, the flow partition wall 33. Here, the flow partition wall 33 has a height such that the upper portion of the flowing space F of the lid 30 is connected to the lower portion of the flowing space F of the lid 30.

The following is a description of a structure wherein a plurality of flow partition walls 33 are disposed in the flowing space F of the lid 30.

The two ends of the flow partition walls 33 arranged in odd number of positions from the lower inlet 31 may be spaced apart from the two widthwise ends of the lid 30. The two ends of the flow partition walls 33 arranged in even number of positions from the lower inlet 31 may be connected to the two widthwise ends of the lid 30, and the flow partition walls 33 arranged in even number of positions from the lower inlet 31 may be separated at the center portions thereof.

In addition, the two ends of the flow partition walls 33 arranged in odd number of positions from the lower inlet 31 may be connected to the two widthwise ends of the lid 30. The two ends of the flow partition walls 33 arranged in even number of positions from the lower inlet 31 may be spaced apart from the two widthwise ends of the lid 30.

Accordingly, the plurality of flow partition walls 33 may form a zigzag-shaped flow passage in the flowing space F of the lid 30. Apparently, the plurality of flow partition walls 33 may form various types of flow passages in the flowing space F of the lid 30.

In addition, while the gas introduced through the lower inlet 31 flows in the flowing space F toward the exhaust outlet 39 of the lid 30, the flow may be guided in widthwise direction by the flow partition walls 33.

The flow partition wall 33 partially blocks the flowing space F to change the flow direction of gas and dust. Accordingly, the flow time and flow distance of gas and dust in the flowing space F of the lid 30 may be increased. In addition, by increasing the flow time and flow distance of gas and dust, the amount of dust mixed in the gas that is deposited at the bottom of the flowing space F may be increased, thereby minimizing the amount of dust discharged.

A pocket projection 35 protruding upward across the flow passage may be provided at the bottom of the flowing space F of the lid 30. A plurality of pocket projections 35 may be installed at a pair of flow partition walls 33. The height of the pocket projection 35 is less than that of the flow partition wall 33. Since the pocket projection 35 acts as a resistance to gas and dust flowing along the flow passage, dust may be deposited in the pocket space between the pocket projections 35. Since the pocket projections 35 are arranged in a row between a pair of adjacent flow partition walls 33, the total amount of dust deposited may significantly increase as the number of pocket projections 35 increases despite the dust being deposited in each pocket space. Accordingly, the amount of dust discharged through the exhaust outlet 39 may significantly be reduced.

The flow partition wall 33 is parallel to widthwise direction of the lid 30, and the pocket projection 35 is parallel to lengthwise direction of the lid 30. Here, the pocket projection 35 may be perpendicular to the flow partition wall 33. Apparently, the pocket projection 35 may be arranged obliquely with respect to the flow partition wall 33.

According to the present invention, the gas generated when the battery module 50 ignites is introduced into the inner space I of the side beam 25 through the gas inlet 251 above the battery module 50 in the accommodating space A. The gas in the inner space I flows along lengthwise direction of the inner space I of the side beam 25 and is introduced into the flowing space F of the lid 30 through the upper outlet 257 and the lower inlet 31. Thereafter, the gas passes through the flowing space F of the lid 30 and is discharged to the outside through the exhaust outlet 39.

In addition, according to the present invention, the dust mixed in the gas when the battery module 50 ignites is blocked around the gas inlet 251 to be primarily removed. In addition, the dust passing through the gas inlet 251 is removed secondarily by falling into the lower pocket P of the side beam 25. The dust in the inner space I of the side beam 25 is removed thirdly while flowing in the flowing space F of the lid 30. Accordingly, the gas flow passage of the battery pack 10 may be prevented from being narrowed or blocked by the dust generated when the battery module 50 ignites.

In addition, since the gas flow passage may be prevented from being blocked, rapid increase in the internal pressure of the battery pack 10 may be prevented. In addition, the collapse of the structure of the battery module 50 or the battery pack 10 may be prevented, and the flame may be prevented from being discharged to the outside due to the collapse, thereby reducing the risk of fire.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack, comprising:
a main frame provided with an internal space and an open upper portion;
a side beam dividing an accommodating space where a battery module is accommodated and provided with an inner space spatially connected to the accommodating space, the side beam including a gas inlet disposed at two widthwise ends thereof that spatially connect the accommodating space and the inner space; and
a lid covering the accommodating space of the main frame and provided with a flowing space connected to the inner space and an exhaust outlet connected to the flowing space,
wherein the gas inlet is disposed at a predetermined height higher than an upper end portion of the battery module.

2. The battery pack of claim 1, wherein the side beam further comprises an internal partition wall extending in widthwise direction to divide the inner space.

3. The battery pack of claim 1, wherein a lower pocket connected to the inner space is provided under the inner space of the side beam, and
a chute member is provided between the inner space and the lower pocket.

4. The battery pack of claim 3, wherein the chute member comprises:
a first chute disposed under the gas inlet and inclined downward from an inner side surface of the side beam toward a widthwise center of the side beam; and
a second chute inclined downward from an internal partition wall of the side beam toward the inner side surface of the side beam.

5. The battery pack of claim 4, wherein the first chute is spaced apart from the internal partition wall, and
the second chute is spaced apart from the inner side surface of the side beam.

6. The battery pack of claim 3, wherein dust in the inner space descends along the chute member and is deposited in the lower pocket, and
the chute member prevents dust in the lower pocket from moving upward into the inner space.

7. The battery pack of claim 1, wherein at least one flow partition wall is installed in the flowing space of the lid, the flow partition wall extending in widthwise direction of the lid and partially blocks the flowing space in lengthwise direction to form a flow passage.

8. The battery pack of claim 7, wherein a gas introduced through the lower inlet and flowing in the flowing space toward the exhaust outlet of the lid is guided in widthwise direction by the flow partition wall.

9. The battery pack of claim 7, wherein a pocket projection protruding upward across the flow passage is provided at a bottom of the flowing space of the lid.

10. The battery pack of claim 9, wherein the flow partition wall is parallel to widthwise direction of the lid, and
the pocket projection is parallel to lengthwise direction of the lid.

11. The battery pack of claim 9, wherein the pocket projection guides dust mixed in the gas to be deposited in the pocket space divided by the pocket projection.

12. The battery pack of claim 1, wherein a lower inlet of the lid is disposed at a center portion of the lid, and
the exhaust outlet is disposed at a lengthwise end of the lid.

13. The battery pack of claim 1, wherein an upper outlet is provided at one lengthwise end of an upper surface of the side beam,
a lower inlet is provided at a portion of a bottom surface of the lid facing the upper outlet, and
the upper outlet and the lower inlet connect the inner space of the side beam to the flowing space of the lid.

14. The battery pack of claim 13, wherein a gas generated in the battery module is introduced into an internal partition wall of the side beam through the gas inlet in a portion of the accommodating space above the battery module, flows along lengthwise direction of the inner space of the side beam, enters the flowing space of the lid through the upper outlet and the lower inlet, and is discharged to outside through the exhaust outlet after passing through the flowing space of the lid.
